# FASCICULE DE BREVET EUROPEEN

(11) **EP 2 735 508 B1**
(45) Date de publication et mention de la délivrance du brevet: **06.07.2016**
(21) Numéro de dépôt: 13005184.0
(22) Date de dépôt: 04.11.2013
(51) Int. Cl.: B64C 27/12, B64D 35/08

(54) **Procédé et aéronef à voilure tournante muni de deux turbomoteurs principaux et d'un turbomoteur secondaire moins puissant**
Verfahren und Drehflügelflugzeug vorgesehen mit zwei Haupturbinentriebwerken und einem weniger leistungsstarken sekundären Turbinentriebwerk
Method and rotary-wing aircraft provided with two main turboshaft engines and one less-powerful secondary turboshaft engine

(30) Priorité: 26.11.2012 FR 1203183
(43) Date de publication de la demande: 28.05.2014
(73) Titulaire: Airbus Helicopters, 13725 Marignane Cedex (FR)
(72) Inventeur: Certain, Bernard, 13090 AIX EN Provence (FR)
(74) Mandataire: GPI & Associés

(56) Documents cités:
- EP-A1- 2 148 066
- US-A- 3 002 710
- US-A- 4 177 693
- US-A1- 2009 186 320

## Description

La présente invention concerne un aéronef à voilure tournante muni de deux turbomoteurs principaux et d'un turbomoteur secondaire moins puissant, et un procédé de contrôle de cet aéronef.

On entend par turbomoteur une unité motrice participant à la propulsion et/ ou à la sustentation d'un aéronef. Sur un appareil muni d'une voilure tournante, on appelle « turbomoteur » une unité motrice mettant en rotation une boîte de transmission de puissance qui entraîne en rotation au moins un rotor de la voilure tournante.

Un aéronef est parfois équipé d'une unité motrice auxiliaire thermique connue sous l'acronyme APU (« auxiliaire power unit » en langue anglaise). Cette unité motrice auxiliaire peut être par exemple utilisée pour générer de l'énergie électrique, ou pour entraîner des systèmes hydrauliques. Par contre, l'unité motrice auxiliaire n'entraîne pas une boîte de transmission de puissance d'un rotor sur un aéronef à voilure tournante.

Par conséquent, l'unité motrice auxiliaire d'un aéronef ne représente pas un turbomoteur au sens de l'invention.

Cette invention s'inscrit alors dans le domaine des installations motrices des aéronefs à voilures tournantes, tels que des hélicoptères par exemple.

Les caractéristiques d'un turbomoteur varient de fait en fonction de son dimensionnement.

Ainsi, la demanderesse constate que la masse spécifique d'un turbomoteur dépend de la puissance pouvant être fournie par ce turbomoteur. Plus un turbomoteur est puissant, plus sa masse spécifique est faible. On rappelle que la masse spécifique d'un moteur développant une puissance donnée correspond à la masse de ce moteur divisé par ladite puissance donnée.

De même, la consommation spécifique en carburant d'un turbomoteur dépend de la puissance pouvant être fournie par ce turbomoteur. Par contre, on constate que plus un turbomoteur est puissant, plus sa consommation spécifique est faible.

Dès lors, l'agencement d'un turbomoteur très puissant parait plus rentable que l'agencement d'un turbomoteur moins puissant d'un point de vue consommation de carburant.

Cependant, la consommation spécifique d'un turbomoteur donné varie aussi en fonction de la puissance fournie. Par suite, un turbomoteur présente une consommation spécifique optimisée lorsque le turbomoteur développe la puissance maximale autorisée pour ce turbomoteur. Toutefois, lorsque la puissance développée baisse, la consommation spécifique du turbomoteur augmente.

Il ressort de ces constations que le dimensionnement d'un turbomoteur peut s'avérer délicat.

Sur un aéronef à voilure tournante, le constructeur détermine la puissance maximale que doit fournir un turbomoteur pour garantir les performances requises pour l'aéronef. Dès lors, le turbomoteur est dimensionné pour fournir cette puissance maximale.

Lorsque la puissance d'un unique turbomoteur s'avère insuffisante, les constructeurs agencent naturellement une pluralité de turbomoteurs sur les aéronefs. Les aéronefs de fort tonnage comportent alors plusieurs turbomoteurs.

Les aéronefs multimoteurs peuvent donc être intéressants. Cependant, l'utilisation de tels aéronefs multimoteurs pose le problème de la sécurité du vol en cas de panne d'un turbomoteur.

Trois configurations sont en particulier utilisées sur un aéronef à voilure tournante.

Selon une première configuration, l'aéronef est équipé de deux turbomoteurs identiques surpuissants.

On appelle « turbomoteurs identiques » des turbomoteurs ayant des caractéristiques d'entraînement identiques d'un organe rotatif, et plus particulièrement des turbomoteurs développant des puissances maximales théoriques égales.

A l'inverse, on appelle « moteurs inégaux » des moteurs ayant des caractéristiques d'entraînement distinctes, à savoir des moteurs générant des puissances maximales différentes.

Dans le cadre de la première configuration, les deux turbomoteurs sont chacun surdimensionnés de manière à assurer la sécurité du vol en cas de panne de l'autre turbomoteur.

Chaque turbomoteur peut alors fonctionner à un régime dit « régime courant » durant un vol de croisière. Ce régime courant est parfois dénommé « régime maximal continu » et associe une puissance maximale en continu PMC à une durée d'utilisation illimitée.

En outre, chaque turbomoteur peut aussi fonctionner à des régimes spécifiques utilisés durant des phases spécifiques de vol.

Ainsi, les constructeurs ont prévu un régime dénommé « régime spécifique normal » par commodité. Ce régime spécifique normal est souvent dénommé « régime de décollage » du fait de son utilisation durant une phase spécifique de décollage. Sur un aéronef bimoteur, le régime spécifique normal est aussi utilisé durant une phase spécifique proche du vol stationnaire.

Le régime spécifique normal associe une puissance maximale au décollage PMD à une durée d'utilisation restreinte. La puissance maximale au décollage PMD est supérieure à la puissance maximale en continu PMC.

Par ailleurs, les régimes spécifiques d'urgence suivants sont utilisés sur les aéronefs bimoteur lorsque l'un des turbomoteurs tombe en panne:
- un premier régime spécifique d'urgence associant une puissance de super urgence PSU à une durée de l'ordre de trente secondes consécutives;
- un deuxième régime spécifique d'urgence associant une puissance maximale d'urgence PMU à une durée d'utilisation de l'ordre de deux minutes ;
- un troisième régime spécifique d'urgence associant une puissance intermédiaire d'urgence PIU à une durée d'utilisation couvrant la fin d'un vol après la panne du turbomoteur par exemple.

Les puissances développées lors de l'utilisation des régimes spécifiques d'urgence sont plus importantes que les puissances développées lors de l'utilisation du régime courant.

Chaque turbomoteur est donc classiquement dimensionné en fonction de la puissance d'urgence la plus élevée, à savoir la puissance de super urgence PSU selon les régimes précédents. Selon les principes évoqués précédemment, la consommation spécifique de ces turbomoteurs lors de l'utilisation de la puissance maximale continue n'est donc pas optimale, la puissance maximale continue PMC étant éloignée de la puissance maximale pouvant être fournie par le turbomoteur.

Selon une deuxième configuration, l'aéronef est équipé de deux turbomoteurs identiques, et s'accompagne de la mise en place de « temps d'impasse ».

Sur la base de retour d'expérience, il peut être envisagé de ne pas tenir compte du risque de panne dans certaines phases de vol. Dès lors, le turbomoteur peut être dimensionné pour fournir des puissances d'urgence plus faibles que dans le cadre de la première configuration. La masse du moteur est alors réduite, mais a pour conséquence une réduction de la puissance maximale continue PMC.

Cependant, cette deuxième configuration peut induire la mise en place d'entraînements pour les pilotes visant à minimiser la durée des phases de vol pour lesquelles le cas de panne d'un turbomoteur n'a pas été envisagé.

Selon une troisième configuration, l'aéronef est équipé de trois turbomoteurs identiques. En cas de panne d'un turbomoteur, deux turbomoteurs restent en fonctionnement pour assurer la sécurité du vol.

Pour un même aéronef, une installation motrice trimoteur nécessite des turbomoteurs moins puissants qu'une installation bimoteur.

Toutefois, l'implémentation de turbomoteurs moins puissants par rapport à un aéronef bimoteur n'est pas totalement optimisée. En effet, on rappelle que l'agencement d'un turbomoteur très puissant parait plus rentable que l'agencement d'un turbomoteur moins puissant d'un point de vue consommation de carburant.

Le dimensionnement de l'installation motrice d'un aéronef s'avère donc complexe, indépendamment de la configuration choisie.

Parmi l'arrière plan technologique, on connaît le document US 4,479,619 qui propose un système de transmission de puissance pour des hélicoptères trimoteur.

Cette solution propose également l'alternative de débrayage d'un moteur sur trois.

L'hélicoptère Super-Frelon de la demanderesse possédait également trois turbomoteurs identiques (sans embrayage).

Le document US 3,963,372 propose une solution de management de la puissance et de contrôle des moteurs pour des hélicoptères trimoteur.

Pour pallier la problématique des moteurs conçus de manière surdimensionnée, une installation des moteurs à puissances maximales inégales, dans le cas des aéronefs bimoteur, a déjà été envisagée par le passé. C'est le cas du document WO2012/059671A2 qui propose deux moteurs à puissances maximales inégales.

Le document US 2009/ 186320 présente un aéronef comprenant trois turbomoteurs paraissant identiques. L'aéronef comporte un système pour simuler une panne d'un turbomoteur

De même, le document US 3, 002, 710 présente un aéronef comprenant au moins trois moteurs.

Le document US 4, 177, 693 décrit une boîte de transmission de puissance reliée à trois moteurs paraissant identiques.

Le document EP 1175337 décrit un système de commande mécanique supplémentaire de giravion.

Enfin, on connaît aussi le document EP 2 148 066.

La présente invention a alors pour objet de proposer un aéronef selon une configuration innovante visant à optimiser l'installation motrice.

Selon l'invention, un aéronef est muni d'une voilure tournante et de trois turbomoteurs pour mettre en mouvement la voilure tournante.

De plus, lesdits trois turbomoteurs incluent deux turbomoteurs principaux identiques pouvant fonctionner selon au moins un régime spécifique associé à une puissance principale pouvant être développée. Les deux turbomoteurs principaux peuvent aussi fonctionner à un régime courant associé à une puissance maximale continue PMC. Autrement dit, chaque turbomoteur principal peut développer la puissance maximale continue PMC.

Lesdits trois turbomoteurs incluent aussi un turbomoteur secondaire pouvant fonctionner selon ledit au moins un régime spécifique en fournissant une puissance secondaire proportionnelle à la puissance principale correspondante selon un coefficient de proportionnalité inférieur ou égal à 0.5.

Ainsi, le turbomoteur secondaire développe une puissance qui est au plus égale à la moitié de la puissance développée par chaque turbomoteur principal.

L'aéronef ne présente donc pas trois moteurs identiques au sens de certains états de la technique, mais deux « gros turbomoteurs principaux » identiques et un « petit turbomoteur secondaire », les termes relatifs « gros » et « petit » faisant notamment références aux puissances développées par ces turbomoteurs.

L'aéronef possède alors un système de contrôle pour entraîner la voilure tournante en faisant fonctionner chaque turbomoteur principal en permanence durant un vol et en complément le turbomoteur secondaire durant au moins une phase spécifique prédéterminée.

On entend par « phase spécifique », les périodes durant lesquelles le turbomoteur secondaire est sollicité pour participer à la propulsion et/ou à la sustentation de l'aéronef.

Par conséquent, l'invention suggère d'utiliser deux turbomoteurs identiques, et un turbomoteur secondaire pouvant fournir une puissance dite « puissance secondaire » inférieure à la puissance dite « puissance primaire » pouvant être fournie par chaque turbomoteur principal à un même régime spécifique.

L'implémentation d'un turbomoteur secondaire sous-dimensionné et de petite taille par rapport aux turbomoteurs principaux peut paraître surprenante et contre productive. En effet, on rappelle que plus un turbomoteur est puissant, plus sa masse spécifique est faible. L'agencement d'un petit turbomoteur peu puissant paraît aberrant au regard de ce principe.

Cependant, l'invention prévoit de n'utiliser ce turbomoteur secondaire que dans des phases spécifiques. L'utilisation ponctuelle et limitée durant la vie de l'aéronef d'un turbomoteur peu rentable n'est alors pas nécessairement gênante au regard des avantages de l'invention.

En effet, un tel aéronef ne nécessite pas l'implémentation de régime spécifique d'urgence très puissant, tels que les régimes associés à la puissance de super urgence PSU et à la puissance maximale d'urgence PMU.

Dès lors, les turbomoteurs principaux peuvent comporter un régime spécifique normal d'utilisation à savoir un régime de décollage associé à une puissance principale maximale au décollage PMD, et un régime courant associé à une puissance maximale en continu PMC.

Le turbomoteur secondaire peut lui comporter un régime spécifique normal associé à une puissance secondaire maximale au décollage PMD'. La puissance secondaire maximale au décollage PMD' est alors égale à k fois la puissance principale maximale au décollage PMD, ou « k » représente ledit coefficient de proportionnalité.

Par conséquent, les turbomoteurs principaux peuvent être dimensionnés en fonction de leur puissance maximale en continu. La consommation spécifique des turbomoteurs principaux durant un vol de croisière par exemple est alors optimisée. Cette puissance maximale continue étant majoritairement utilisée durant la vie d'un l'aéronef, cette optimisation s'avère intéressante.

Ainsi, durant un vol de croisière, seuls les turbomoteurs principaux sont par exemple sollicités pour l'entraînement des moyens de propulsion et/ou de sustentation.

La panne d'un turbomoteur principal n'est toutefois pas contraignante, l'autre turbomoteur pouvant assurer le vol compte tenu des puissances requises en croisière.

Par contre, durant chaque phase spécifique nécessitant une puissance importante, le système de contrôle sollicite les turbomoteurs principaux et le turbomoteur secondaire pour l'entraînement des moyens de propulsion et/ou de sustentation. En cas de panne d'un turbomoteur principal, le turbomoteur principal restant en fonctionnement et le turbomoteur secondaire peuvent alors assurer la sécurité du vol.

Ces phases spécifiques étant relativement peu usitées, le rendement non optimal du turbomoteur secondaire est par exemple compensé par le gain réalisé durant les vols de croisière. En effet, l'utilisation d'une phase spécifique est statistiquement de l'ordre de 5 minutes par heure de vol.

En outre, durant chaque phase spécifique et en l'absence de panne, le turbomoteur secondaire peut apporter un surcroît de puissance susceptible d'améliorer les performances de l'aéronef.

A cet effet, l'aéronef peut comprendre un rotor additionnel pour le contrôle du mouvement en lacet de l'aéronef et une voilure tournante.

Dès lors, l'aéronef peut comprendre une boîte de transmission de puissance principale entraînant la voilure tournante et une boîte de transmission de puissance arrière entraînant le rotor additionnel. Les turbomoteurs principaux peuvent entraîner la boîte de transmission de puissance principale, cette boîte de transmission de puissance principale entraînant la boîte de transmission de puissance arrière par une liaison mécanique.

Le turbomoteur secondaire peut alors engrener ladite liaison mécanique.

Ainsi, une partie importante de la puissance délivrée par le turbomoteur secondaire durant chaque phase spécifique et hors cas de panne est exploitée par le rotor additionnel. Le surplus de puissance est exploité par la voilure tournante pour éventuellement améliorer les performances de l'aéronef.

Selon d'autres variantes, le turbomoteur secondaire peut être relié soit à une liaison mécanique allant d'un turbomoteur principal vers la boîte de transmission de puissance principale, soit à la boîte de transmission de puissance principale par une nouvelle liaison mécanique.

A titre d'exemple, un aéronef à voilure tournante bimoteur peut comporter deux turbomoteurs développant chacun une puissance maximale continue de l'ordre de 1500 KW, et une puissance de super-urgence de l'ordre de 1800 KW.

En cas de panne d'un turbomoteur, l'installation motrice peut donc développer une puissance de 1800 KW durant un temps limité.

En mettant en oeuvre l'invention, il est possible de développer deux turbomoteurs principaux développant chacun une puissance maximale continue de l'ordre de 1500 KW, mais pas de puissance de super-urgence pour optimiser leur masse spécifique et leur consommation spécifique lors de l'utilisation de la puissance principale maximale continue.

L'ajout d'un turbomoteur secondaire selon l'invention permet toutefois d'augmenter la puissance délivrée par l'installation motrice, pour par exemple au moins atteindre une puissance totale de 1800 KW. Ce turbomoteur secondaire est en outre de petite taille et n'induit pas une augmentation de masse trop contraignante. On verra d'ailleurs par la suite que cette augmentation de masse peut étonnamment être faible.

Cet aéronef peut de plus comporter une ou plusieurs des caractéristiques qui suivent.

Par exemple, le coefficient de proportionnalité peut être compris entre 0.2 et 0.5 inclus.

Le turbomoteur secondaire est en effet un petit turbomoteur sous-dimensionné par rapport aux turbomoteurs principaux.

En reprenant l'exemple donné précédemment, un coefficient de proportionnalité égal à 0.2 permet à l'installation d'atteindre une puissance totale de 1800 KW.

Cette plage du coefficient de proportionnalité est en outre limitée. De plus, cette plage du coefficient de proportionnalité présente des avantages particuliers ne pouvant être déduits par de simples manoeuvres d'exécutant, mais qui résultent d'une activité inventive.

En effet, la demanderesse constate que lors d'un atterrissage en autorotation avec les deux moteurs principaux ne fournissant plus de puissance, l'utilisation d'un turbomoteur secondaire présentant un tel coefficient de proportionnalité permet de réduire la vitesse de descente d'un facteur au moins égal à deux par rapport à un aéronef dépourvu de ce turbomoteur. L'atterrissage peut alors se dérouler dans des conditions moins défavorables.

Par ailleurs, durant chaque phase spécifique, le système de contrôle peut réguler les turbomoteurs pour les faire fonctionner à un régime spécifique normal utilisable en l'absence de panne d'un turbomoteur.

Par exemple, au cours d'un vol stationnaire, les turbomoteurs fonctionnent selon leur régime spécifique normal de décollage.

Aucun régime d'urgence n'est alors prévu contrairement à l'état de la technique.

Selon une autre variante, durant chaque phase spécifique, le système de contrôle peut réguler les turbomoteurs pour les faire fonctionner selon des régimes incluant un régime spécifique normal utilisable en l'absence de panne d'un turbomoteur, et un unique régime spécifique d'urgence utilisable en permanence en cas de panne d'un turbomoteur principal.

Cette variante prévoit la mise en place d'un unique régime spécifique d'urgence, par exemple du type du troisième régime spécifique d'urgence de l'état de la technique associé à la puissance intermédiaire d'urgence PIU. Un tel régime n'est peu voire pas endommageant, et induit une surpuissance relativement peu élevée par rapport à la puissance maximale continue PMC notamment.

Par ailleurs, chaque turbomoteur comportant un générateur de gaz, l'aéronef peut comporter un système de mesure pour mesurer la vitesse de rotation Ng de chaque générateur de gaz, le système de contrôle coopérant avec le système de mesure pour réguler le turbomoteur secondaire durant chaque phase spécifique en régulant la vitesse de rotation du générateur de gaz du turbomoteur secondaire en fonction de la vitesse de rotation du générateur de gaz d'un turbomoteur principal. Plus particulièrement, le système de contrôle peut réguler la vitesse de rotation du générateur de gaz du turbomoteur secondaire en fonction de la vitesse de rotation la plus élevée des générateurs de gaz des turbomoteurs principaux.

Le système de contrôle peut tendre à induire des vitesses de rotation égales pour les générateurs de gaz du turbomoteur secondaire et du turbomoteur principal servant de référence.

Durant chaque phase spécifique et en cas de panne d'un turbomoteur principal, le turbomoteur principal et le turbomoteur secondaire accélèrent pour compenser la perte de puissance résultant de la panne.

L'accélération du turbomoteur secondaire est alors très rapide du fait de la petite taille du turbomoteur secondaire comparé aux dimensions des turbomoteurs principaux. Cette accélération rapide permet au pilote de gagner de précieuses secondes.

De plus, malgré les puissances inégales délivrées par les turbomoteurs, cette régulation permet d'afficher des paramètres de contrôle similaires à un pilote, à savoir des vitesses de rotation des générateurs de gaz des turbomoteurs devant être sensiblement égales. Les vitesses de rotation des générateurs de gaz des turbomoteurs présentées à un pilote sont par exemple exprimées en pourcentage de la vitesse de rotation des générateurs de gaz au régime de décollage.

En outre, l'aéronef peut comporter un dispositif de mesure de la vitesse d'avancement de l'aéronef, le système de contrôle coopérant avec le système de mesure pour utiliser le turbomoteur secondaire afin d'entraîner la voilure tournante lorsque ladite vitesse d'avancement est inférieure à un seuil.

Dès lors, lesdites phases spécifiques comprennent des périodes de vol à basse vitesse. Le seuil peut par exemple correspondre à la vitesse de puissance minimale nécessaire au vol connue sous l'appellation Vy, voire à un pourcentage de cette vitesse de puissance minimale Vy.

Eventuellement, l'aéronef comportant un train d'atterrissage rétractable et un système de détermination pour déterminer si le train d'atterrissage est sorti, le système de contrôle coopère avec le système de détermination pour utiliser le turbomoteur secondaire afin d'entraîner la voilure tournante lorsque le train d'atterrissage est sorti.

En effet, un vol à basse vitesse est parfois effectué avec le train d'atterrissage sorti. Dès lors, le turbomoteur secondaire peut être sollicité pour participer à la propulsion et/ou à la sustentation de l'aéronef dans cette situation.

L'aéronef peut aussi comporter un dispositif de détermination pour déterminer si l'aéronef est au sol, le système de contrôle coopérant avec le dispositif de détermination pour utiliser le turbomoteur secondaire afin d'entraîner la voilure tournante lorsque l'aéronef est au sol.

Le turbomoteur secondaire peut éventuellement être utilisé pour déplacer l'aéronef sur un parking.

En outre, l'aéronef est éventuellement dépourvu d'unité motrice auxiliaire pour fournir de l'énergie électrique, l'aéronef comportant un système de génération d'énergie électrique coopérant avec le turbomoteur secondaire pour générer de l'énergie électrique en dehors de chaque phase spécifique et une batterie de 17 Ampères heure (Ah) pour alimenter le turbomoteur secondaire.

L'impact de l'agencement d'un turbomoteur secondaire au sens de l'invention devient alors limité.

Un aéronef bimoteur comporte généralement une unité motrice auxiliaire et des batteries puissantes d'au moins 45 Ampères heure. La suppression de l'unité motrice auxiliaire et le remplacement de ces batteries puissantes par des batteries de moindre importance permet d'effectuer un gain de masse non négligeable. Ce gain peut être de l'ordre d'un kilogramme par Ampère heure économisé.

Dès lors, le turbomoteur secondaire peut remplir la fonction d'une unité motrice auxiliaire. Ce turbomoteur secondaire est alors démarré au sol à l'aide de la batterie de 17 Ampères heure. Le turbomoteur permet le roulage de l'aéronef, et la génération d'une énergie électrique suffisante pour démarrer les turbomoteurs principaux.

De plus, en dehors de chaque phase spécifique et en vol, le turbomoteur peut aussi fonctionner dans un mode auxiliaire pour générer de l'énergie électrique.

Ce fonctionnement peut être intéressant en cas de panne du réseau électrique de bord, ou pour alimenter une installation nécessitant beaucoup d'énergie électrique telle qu'une installation de dégivrage par exemple.

A cet effet, le système de contrôle peut comporter un système de déconnexion du turbomoteur secondaire pour désolidariser le turbomoteur secondaire de la voilure tournante.

En cas de problème électrique, le turbomoteur secondaire peut être désolidarisé de la chaine d'entraînement de la voilure tournante.

Le système de génération d'énergie électrique peut comprendre une générateur-démarreur du turbomoteur secondaire. Dès lors, le fonctionnement du turbomoteur secondaire permet de générer une énergie électrique via le générateur-démarreur installé sur ce turbomoteur secondaire.

En cas de panne de la batterie de 17 Ampères heure, au moins un alternateur connecté à un turbomoteur principal peut être en mesure de fournir l'énergie électrique requise au démarrage du turbomoteur secondaire le cas échéant.

Un générateur-démarreur usuel est capable de fournir 200 Ampères sous une tension de 24 Volts, et peut donc avantageusement fournir le courant électrique nécessaire pour par exemple alimenter des équipements de dégivrage, ou encore suppléer des alternateurs des turbomoteurs principaux en cas de panne d'éléments du réseau électrique de bord (alternateur, redresseur...). Le réseau électrique pourrait être similaire à celui qui fait l'objet du document FR2962404.

L'aéronef peut de plus comporter des moyens d'alerte pour signifier à un pilote que le turbomoteur secondaire doit être mis en oeuvre. L'aéronef est alors muni d'un moyen d'activation manuel.

Le turbomoteur secondaire peut aussi être sollicité automatiquement par le système de contrôle.

Un tel système de contrôle peut notamment comporter un organe de régulation électronique par turbomoteur connu sous l'acronyme FADEC, ces organes communiquant éventuellement entre eux.

Outre un aéronef, l'invention vise un procédé d'utilisation d'un aéronef à voilure tournante du type décrit précédemment.

Au cours de ce procédé, on agence trois turbomoteurs dans l'aéronef pour mettre en mouvement la voilure tournante, lesdits trois turbomoteurs incluant deux turbomoteurs principaux identiques pouvant fonctionner selon au moins un régime spécifique associé à une puissance principale pouvant être développée, lesdits trois turbomoteurs incluant un turbomoteur secondaire pouvant fonctionner selon ledit au moins un régime spécifique en fournissant une puissance secondaire proportionnelle à la puissance principale correspondante selon un coefficient de proportionnalité inférieur ou égal à 0.5.

Dès lors, on contrôle les turbomoteurs pour entraîner la voilure tournante en faisant fonctionner chaque turbomoteur principal en permanence durant un vol, et on contrôle en complément le turbomoteur secondaire durant au moins une phase spécifique prédéterminée.

Ce procédé peut comporter une ou plusieurs des caractéristiques qui suivent.

Ainsi, on peut dimensionner le turbomoteur secondaire pour que le coefficient de proportionnalité soit compris entre 0.2 et 0.5 inclus.

En outre, chaque turbomoteur principal pouvant fonctionner selon un régime courant associé à une puissance maximale continue et un régime spécifique normal associé à une puissance principale maximale au décollage qui est utilisée durant chaque phase spécifique, le turbomoteur secondaire pouvant fonctionner selon une puissance secondaire maximale au décollage au régime spécifique normal, selon une variante :
- on dimensionne les turbomoteurs principaux en fonction de la puissance maximale continue pour optimiser la consommation spécifique des turbomoteurs principaux à cette puissance maximale continue,
- on dimensionne la puissance principale maximale au décollage en fonction de la puissance maximale continue selon une loi de proportionnalité, cette loi de proportionnalité étant fixée par les lois de la thermodynamique et la durée de vie du moteur recherchée,
- on dimensionne la puissance secondaire maximale au décollage en fonction de la puissance principale maximale au décollage en mettant en oeuvre ledit coefficient de proportionnalité k.

Selon l'état de la technique, on dimensionne un turbomoteur en fonction de la puissance de super-urgence. Il en résulte notamment une consommation spécifique non optimisée à la puissance maximale continue.

L'invention va à l'encontre de ce préjugé en dimensionnant les turbomoteurs principaux en fonction de la puissance maximale continue à fournir. Le constructeur établit aisément cette puissance maximale continue en fonction des performances requises de l'aéronef.

Par des lois classiques, le constructeur en déduit la puissance principale maximale de décollage. La puissance principale maximale au décollage est par exemple de l'ordre de 1.11 fois la puissance maximale continue.

Enfin, le constructeur dimensionne le turbomoteur secondaire afin que ce turbomoteur secondaire puisse fournir une puissance secondaire maximale au décollage égale à k fois la puissance principale maximale au décollage PMD.

Lorsque le turbomoteur est sollicité durant chaque phase spécifique et en dehors de cas de panne, les turbomoteurs fonctionnent alors conformément à leur régime spécifique normal.

Toutefois, le surcroit de puissance offert par le turbomoteur secondaire évite aux turbomoteurs principaux de devoir délivrer la puissance principale maximale de décollage. La puissance délivrée par les turbomoteurs principaux se rapprochent alors de la puissance maximale continue ayant servie au dimensionnement des turbomoteurs.

Eventuellement, chaque turbomoteur principal pouvant fonctionner selon un régime spécifique d'urgence associé à une unique puissance principale d'urgence durant chaque phase spécifique en cas de panne de l'autre turbomoteur, le turbomoteur secondaire pouvant fonctionner selon le régime spécifique d'urgence à une puissance secondaire d'urgence maximale :
- on dimensionne la puissance principale d'urgence en fonction de la puissance maximale continue selon une règle de proportionnalité,
- on dimensionne la puissance d'urgence secondaire en fonction de la puissance principale d'urgence en mettant en oeuvre ledit coefficient de proportionnalité.

La puissance principale d'urgence est par exemple de l'ordre de 1.025 fois la puissance principale maximale au décollage PMD

Dans ces conditions, on peut réguler le turbomoteur secondaire durant chaque phase spécifique en régulant la vitesse de rotation du générateur de gaz du turbomoteur secondaire en fonction de la vitesse de rotation du générateur de gaz d'un turbomoteur principal, éventuellement en fonction de la vitesse de rotation la plus élevée des générateurs de gaz.

Par ailleurs, on peut réguler la vitesse de rotation du générateur de gaz du turbomoteur secondaire pour la faire tendre vers la vitesse de rotation du générateur de gaz d'un turbomoteur principal.

Par exemple, on régule la vitesse de rotation du générateur de gaz du turbomoteur secondaire :
- en priorité en fonction de la vitesse de rotation du générateur de gaz du turbomoteur développant la plus rapide vitesse de rotation du générateur de gaz,
- en cas de panne du turbomoteur développant la plus rapide vitesse de rotation du générateur de gaz, en fonction de la vitesse de rotation du générateur de gaz du turbomoteur restant en fonctionnement.

De plus, on peut réguler la vitesse de rotation du générateur de gaz du turbomoteur secondaire en fonction de la vitesse de rotation de la voilure tournante en cas de panne des deux turbomoteurs principaux.

Par ailleurs, on peut utiliser le turbomoteur secondaire afin d'entraîner la voilure tournante dans au moins une des situations suivantes :
- lorsque ladite vitesse d'avancement de l'aéronef est inférieure à un seuil.
- ledit aéronef comportant un train d'atterrissage rétractable, on utilise le turbomoteur secondaire afin d'entraîner la voilure tournante lorsque le train d'atterrissage est sorti.
- lorsque l'aéronef est au sol.

Le turbomoteur secondaire peut donc être utilisé uniquement dans une de ces situations, alors que les turbomoteurs principaux sont utilisés en permanence en vol. En dehors de ces situations, le turbomoteur secondaire peut être arrêté, mis au ralenti, ou encore désolidarisé de la mécanique d'entraînement de la voilure tournante.

Selon un procédé, au démarrage de l'aéronef, on démarre en premier lieu le turbomoteur secondaire. Ce turbomoteur secondaire peut entraîner des accessoires pour par exemple préchauffer des huiles de lubrification ou encore une cabine.

Le frein rotor de l'aéronef est alors desserré pour permettre l'entraînement de la voilure tournante à l'aide du turbomoteur secondaire. Eventuellement, l'aéronef peut alors rouler sur le sol.

Les turbomoteurs principaux sont ensuite démarrés. Au décollage, les trois turbomoteurs fonctionnent selon le régime spécifique normal associé à une puissance maximale de décollage. Les trois turbomoteurs fournissent une puissance proportionnelle à leur puissance maximale au décollage selon un même ratio.

La panne du turbomoteur secondaire représente un non événement dans la mesure où les turbomoteurs principaux sont suffisants pour assurer le décollage.

En cas de panne d'un turbomoteur principal, les turbomoteurs restant peuvent accélérer pour compenser la perte de puissance en résultant. Le pilote peut éventuellement se concentrer sur la gestion de la trajectoire lorsque le système de contrôle gère automatiquement les turbomoteurs.

Durant un vol de croisière, le turbomoteur secondaire n'est pas nécessaire pour assurer le vol. Ce turbomoteur secondaire peut alors être arrêté, être mis au ralenti, ou encore être désolidarisé de la mécanique d'entraînement de la voilure tournante. Lorsque le turbomoteur secondaire est désolidarisé de la voilure tournante, ce turbomoteur secondaire peut alors être utilisé dans un mode de fonctionnement d'une unité motrice auxiliaire.

Pour réaliser un entraînement à la panne d'un turbomoteur principal, le système de contrôle peut mettre au ralenti un turbomoteur principal et solliciter le turbomoteur secondaire.

L'invention et ses avantages apparaîtront avec plus de détails dans le cadre de la description qui suit avec des exemples de réalisation donnés à titre illustratif en référence aux figures annexées qui représentent :
- la figure 1, un aéronef selon l'invention,
- la figure 2, un système de déconnexion, et
- la figure 3, un diagramme illustrant la consommation spécifique d'un moteur.

Les éléments présents dans plusieurs figures distinctes sont affectés d'une seule et même référence.

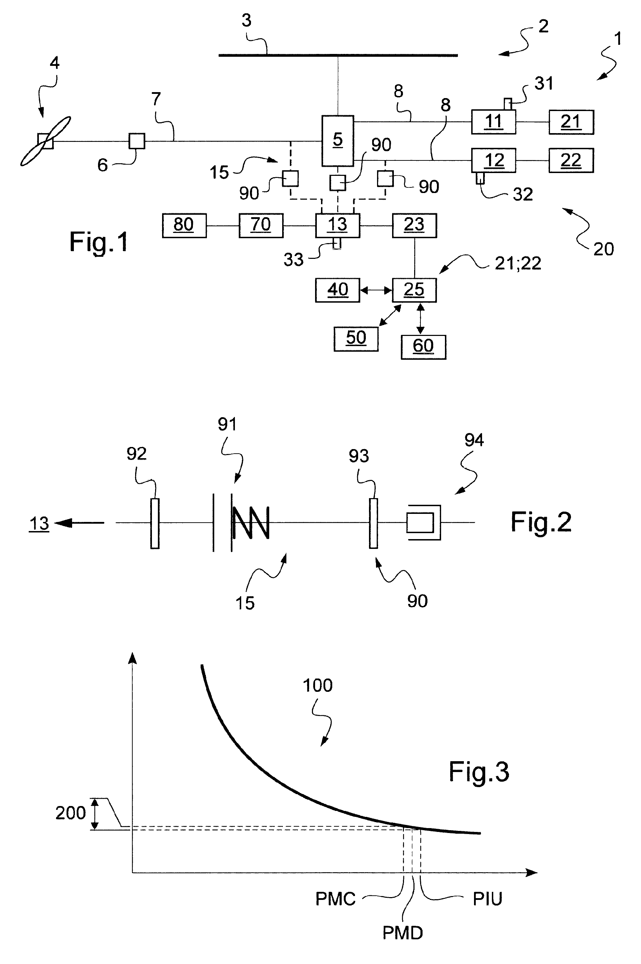

La figure 1 présente un aéronef 1 de manière schématique pour illustrer l'invention.

Cet aéronef 1 peut être muni d'une voilure tournante 2 comprenant au moins un rotor 3 de sustentation voire de propulsion. De plus, l'aéronef peut comporter au moins un rotor complémentaire 4 pour notamment le contrôle du mouvement en lacet de cet aéronef.

Par suite, l'aéronef 1 inclut une boîte de transmission de puissance principale 5 mettant en rotation la voilure tournante 2, et une boîte de transmission de puissance secondaire 6 mettant en rotation le rotor complémentaire 4. Une chaîne de transmission de puissance 7 relie alors la boîte de transmission de puissance principale 5 à la boîte de transmission de puissance secondaire 6.

De plus, l'aéronef comporte trois turbomoteurs 11, 12, 13 pouvant mettre en rotation la voilure tournante 2 et le rotor complémentaire 4 au travers des boîtes de transmission de puissance principale 5 et secondaire 6.

Plus précisément, l'aéronef 1 est notamment équipé de deux turbomoteurs principaux 11, 12. Ces deux turbomoteurs principaux 11, 12 peuvent être liés à la boîte de transmission de puissance principale 5 par des liaisons mécaniques 8 usuelles.

Ces deux turbomoteurs principaux 11, 12 sont identiques. Le constructeur peut prévoir deux régimes de fonctionnement de ces turbomoteurs principaux, à savoir un régime courant associé à une puissance maximale continue PMC et un régime spécifique normal associé à une puissance maximale dite « puissance principale maximale au décollage PMD ».

De plus, le constructeur peut prévoir un unique régime spécifique d'urgence de fonctionnement de ces turbomoteurs principaux associé à une puissance principale d'urgence PIU.

Le régime courant est utilisé durant un vol de croisière, alors que les régimes spécifiques sont utilisés durant des phases spécifiques prédéterminées.

De plus l'aéronef comporte un troisième turbomoteur dénommé « turbomoteur secondaire 13 ». Ce turbomoteur secondaire peut être situé à l'opposé des turbomoteurs principaux par rapport à la boîte de transmission de puissance principale 5 pour améliorer l'équilibrage général de l'aéronef. Par exemple, sur la figure 1, les turbomoteurs principaux 11, 12 peuvent être disposés à droite de la boîte de transmission de puissance principale 5, le turbomoteur secondaire 13 étant disposé à gauche de la boîte de transmission de puissance principale 5.

Le turbomoteur secondaire est alors lié par un système de transmission de puissance mécanique 15 soit à une liaison mécanique 8, soit à la boîte de transmission de puissance principale 5, soit à la chaîne de transmission de puissance 7.

Le système de transmission de puissance mécanique 15, la liaison mécanique 8 et la chaîne de transmission de puissance 7 sont communément appelés « chaîne cinématique de transmission de puissance » par l'homme du métier. Toutefois, des expressions diverses sont usitées pour éviter toute confusion entre les diverses chaînes.

On comprend qu'en fonction des vitesses de rotation, des réducteurs de vitesse de rotation peuvent être agencés sur l'aéronef.

Par exemple, lorsque le turbomoteur secondaire est lié par le système de transmission de puissance mécanique 15 à la chaîne de transmission de puissance 7, un réducteur de vitesse de rotation peut être agencé sur cette chaîne de transmission de puissance 7.

De plus, le système de transmission de puissance mécanique 15 peut inclure un système de déconnexion 90 pour désolidariser le turbomoteur secondaire 13 de la voilure tournante 2 notamment. Le système de déconnexion permet de désolidariser le turbomoteur secondaire 13 en cas de survitesse, ou dans certaine situations décrites par la suite.

Le système de déconnexion 90 peut inclure une roue libre pouvant être inhibée et parfois dénommée « roue libre décrabotable », un embrayage ou encore une roue libre électronique.

Selon la figure 2, une telle roue libre électronique inclut un embrayage 91 usuel. La vitesse de rotation du système de transmission de puissance mécanique 15 étant élevée, l'embrayage 91 peut posséder des dimensions raisonnables.

La roue libre électronique inclut aussi une première roue phonique 92 et une deuxième roue phonique 93 disposées de part et d'autre de l'embrayage 91.

La première roue phonique 92 est plus précisément interposée entre l'embrayage 91 et le turbomoteur secondaire 13. La deuxième roue phonique 93 est disposée entre l'embrayage 91 et une roue libre 94 usuelle.

Les roues phoniques mesurent les vitesses de rotation de la partie mécanique située en amont et en aval de l'embrayage. Dès lors, l'embrayage n'est embrayé que durant des situations prévues par le constructeur, et lorsque lesdites vitesses de rotation permettent une transmission de puissance non glissante.

La roue libre électronique peut aussi comprendre un arbre couplemètre usuel, agencé par exemple entre l'embrayage 91 et une roue phonique.

Ainsi en mode normal, les deux roues phoniques mesurent des vitesses de rotation égales. L'arbre couplemètre permet alors de détecter une inversion du sens du signe du couple transmis de rotation de la roue libre électronique.

Dès lors, l'embrayage est ouvert lorsque la chaîne mécanique tend à mettre en rotation le turbomoteur secondaire.

En référence à la figure 1, le turbomoteur secondaire est prévu pour fonctionner en complément des turbomoteurs principaux lors de la mise en oeuvre des régimes spécifiques.

Lors de la mise en oeuvre d'un régime spécifique, le turbomoteur secondaire 13 fournit alors une puissance secondaire PMD', PIU' proportionnelle à la puissance principale PMD, PIU correspondante des turbomoteurs principaux 11, 12 selon un coefficient de proportionnalité k inférieur ou égal à 0.5.

Ce coefficient de proportionnalité k est éventuellement compris entre 0.2 et 0.5 inclus.

Dès lors, le constructeur peut prévoir le fonctionnement du turbomoteur secondaire selon un régime spécifique normal associé à une puissance secondaire maximale au décollage PMD' égale à k fois la puissance principale maximale au décollage PMD', et éventuellement à un régime spécifique d'urgence associé à une puissance secondaire d'urgence PIU' égale à k fois la puissance principale d'urgence PIU.

Par suite, l'aéronef comprend système de contrôle 20 pour contrôler les turbomoteurs. Ce système de contrôle 20 peut comprendre un organe de régulation électronique 21, 22, 23 par turbomoteur, tel qu'un FADEC.

Pour assurer la sustentation voire la propulsion de l'aéronef, ce système de contrôle 20 sollicite chaque turbomoteur principal 11, 12 en permanence durant un vol, et en complément le turbomoteur secondaire 13 durant au moins une phase spécifique prédéterminée.

A cet effet, les organes de régulation électronique peuvent communiquer entre eux et avec des éléments permettant de déterminer si l'aéronef évolue dans une phase spécifique.

A titre de variante, le système de contrôle peut comporter une unité de traitement 25 communiquant avec les organes de régulation électronique et des éléments permettant de déterminer si l'aéronef évolue dans une phase spécifique.

Par exemple, l'aéronef peut comprendre au moins des éléments suivants :
- un dispositif de mesure 40 usuel pour mesurer la vitesse d'avancement de l'aéronef, ledit système de contrôle communiquant avec ce système de mesure,
- un système de détermination 50 pour déterminer qu'un train d'atterrissage rétractable est sorti, le système de contrôle communiquant avec ce système de détermination,
- un dispositif de détermination 60 pour déterminer si l'aéronef repose sur un sol, le système de contrôle communiquant avec le dispositif de détermination.

Ainsi, selon la variante, on utilise le turbomoteur secondaire afin d'entraîner la voilure tournante dans au moins une des phases spécifiques suivantes :
- lorsque ladite vitesse d'avancement de l'aéronef est inférieure à un seuil,
- ledit aéronef comportant un train d'atterrissage rétractable, lorsque le train d'atterrissage est sorti.
- lorsque l'aéronef repose sur le sol.

Par conséquent, en dehors des phases spécifiques, le turbomoteur secondaire n'est pas utilisé pour entraîner la voilure tournante. Ce turbomoteur secondaire peut être à l'arrêt, au ralenti, ou encore déconnecté via le système de déconnexion 90.

Les turbomoteurs principaux fonctionnent alors selon leur régime courant.

Par contre, durant les phases spécifiques, les turbomoteurs principaux et le turbomoteur secondaire sont utilisés selon un même régime spécifique.

Plus précisément, les turbomoteurs principaux et le turbomoteur secondaire sont utilisés pour fonctionner selon le régime spécifique normal.

En cas de panne, si le turbomoteur principal restant en fonctionnement accélère pour atteindre la puissance principale maximale au décollage voire la puissance principale d'urgence, le turbomoteur secondaire accélère en parallèle pour atteindre respectivement la puissance secondaire maximale au décollage voire la puissance secondaire d'urgence. La régulation du turbomoteur secondaire est simple et ne génère pas une charge de travail additionnelle pour un pilote.

En l'absence de panne d'un turbomoteur principal, le système de contrôle 20 régule les turbomoteurs pour les faire fonctionner selon le régime spécifique normal.

Le cas échéant et en présence d'une panne d'un turbomoteur principal, le système de contrôle 20 régule les turbomoteurs restant en fonctionnement pour les faire fonctionner selon le régime spécifique d'urgence.

Pour réguler les turbomoteurs, chaque turbomoteur 11, 12, 13 comportant un générateur de gaz, l'aéronef 1 est muni d'un système de mesure pour mesurer la vitesse de rotation Ng de chaque générateur de gaz. Ce système de mesure peut comprendre des instruments de mesure 31, 32, 33 usuels agencés sur les trois turbomoteurs.

Le système de contrôle 20 communique alors avec le système de mesure durant chaque phase spécifique pour réguler la vitesse de rotation du générateur de gaz du turbomoteur secondaire en fonction de la vitesse de rotation du générateur de gaz d'un turbomoteur principal 11, 12.

Ainsi, on peut réguler la vitesse de rotation du générateur de gaz du turbomoteur secondaire pour la faire tendre vers la vitesse de rotation du générateur de gaz d'un turbomoteur principal.

Les turbomoteurs principaux sont régulés selon les techniques usuelles, par exemple en fonction d'une consigne de la vitesse de rotation de la voilure tournante. Par contre, le turbomoteur secondaire est régulé pour atteindre une vitesse de rotation de son générateur de gaz égale à la vitesse de rotation du générateur de gaz d'un turbomoteur principal.

Notamment, on peut réguler la vitesse de rotation du générateur de gaz du turbomoteur secondaire en priorité en fonction de la vitesse de rotation du générateur de gaz du turbomoteur principal le plus rapide.

En cas de panne de ce turbomoteur principal, la régulation est effectuée en fonction de la vitesse de rotation du générateur de gaz du turbomoteur restant en fonctionnement.

En outre, on peut réguler la vitesse de rotation du générateur de gaz du turbomoteur secondaire en fonction de la vitesse de rotation de la voilure tournante en cas de panne des deux turbomoteurs principaux.

On note que la panne d'un turbomoteur peut être détectée par un organe de régulation selon des techniques usuelles.

Par ailleurs, l'aéronef 1 peut être dépourvu d'une unité motrice auxiliaire APU pour fournir de l'énergie électrique. L'aéronef 1 peut alors comprendre un système de génération d'énergie électrique 70 engrenant un organe mobile du turbomoteur secondaire pour générer de l'énergie électrique ou pour démarrer le turbomoteur secondaire. Ce système de génération d'énergie électrique 70 peut aussi communiquer avec une batterie de 17 Ampères heure 80 pour alimenter le turbomoteur secondaire.

En référence à la figure 3, la courbe 100, représentant la consommation spécifique d'un turbomoteur, est décroissante dans un diagramme présentant en abscisse la puissance développée par le turbomoteur et en ordonnée la consommation spécifique.

L'invention permet alors de dimensionner les turbomoteurs principaux de manière innovante.

En effet, la suppression du régime d'urgence nécessitant des puissances élevées, un constructeur peut dimensionner les turbomoteurs principaux 11, 12 en fonction de la puissance maximale continue PMC à fournir.

Dès lors, le constructeur peut en déduire la puissance principale maximale au décollage PMD des turbomoteurs principaux, voire la puissance principale d'urgence PIU par des règles classiques.

On constate alors que ces trois puissances sont proches et induisent une variation 200 de consommation spécifique minimisée par rapport à l'état de la technique.

Dès lors, le constructeur dimensionne le turbomoteur secondaire en déterminant la puissance secondaire maximale au décollage PMD' et le cas échéant la puissance secondaire d'urgence PIU' par application du coefficient de proportionnalité k choisi.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) muni d'une voilure tournante (2) et de trois turbomoteurs (11, 12, 13) pour mettre en mouvement ladite voilure tournante (2),
- lesdits trois turbomoteurs incluent deux turbomoteurs principaux (11, 12) identiques, chaque turbomoteur principal pouvant fonctionner selon au moins un régime spécifique associé à une puissance principale (PMD, PIU) pouvant être développée,
**caractérisé en ce que** :
- lesdits trois turbomoteurs incluant un turbomoteur secondaire (13) qui développe une puissance qui est au plus égale à la moitié de la puissance développée par chaque turbomoteur principal, ledit turbomoteur secondaire (13) pouvant fonctionner selon ledit au moins un régime spécifique en fournissant une puissance secondaire (PMD', PIU') proportionnelle à la puissance principale (PMD, PIU) correspondante selon un coefficient de proportionnalité (k) inférieur ou égal à 0.5, ladite puissance secondaire étant donc égale à la puissance principal développée par un turbomoteur principal multiplié par ledit coefficient de proportionnalité,
- ledit aéronef a un système de contrôle (20) pour entraîner la voilure tournante en faisant fonctionner chaque turbomoteur principal (11, 12) en permanence durant un vol et en complément le turbomoteur secondaire (13) durant au moins une phase spécifique prédéterminée.

2. Aéronef selon la revendication 1,
**caractérisé en ce que** ledit coefficient de proportionnalité (k) est compris entre 0.2 et 0.5 inclus.

3. Aéronef selon l'une quelconque des revendications 1 à 2,
**caractérisé en ce que**, durant chaque phase spécifique, ledit système de contrôle (20) régule lesdits turbomoteurs pour les faire fonctionner selon un régime spécifique normal (PMD, PMD') utilisable en l'absence de panne d'un turbomoteur.

4. Aéronef selon l'une quelconque des revendications 1 à 3,
**caractérisé en ce que** durant chaque phase spécifique, ledit système de contrôle (20) régule lesdits trois turbomoteurs (11, 12, 13) pour les faire fonctionner selon des régimes spécifiques incluant un régime spécifique normal (PMD, PMD') utilisable en l'absence de panne d'un turbomoteur, et un unique régime spécifique d'urgence (PIU, PIU') utilisable en permanence en cas de panne d'un turbomoteur principal (11, 12).

5. Aéronef selon l'une quelconque des revendications 1 à 4,
**caractérisé en ce que** chaque turbomoteur (11, 12, 13) comportant un générateur de gaz, ledit aéronef comporte un système de mesure (31, 32, 33) pour mesurer la vitesse de rotation Ng de chaque générateur de gaz, ledit système de contrôle (20) coopérant avec ledit système de mesure (31, 32, 33) pour réguler le turbomoteur secondaire durant chaque phase spécifique en régulant la vitesse de rotation du générateur de gaz du turbomoteur secondaire en fonction de la vitesse de rotation du générateur de gaz d'un turbomoteur principal (11, 12).

6. Aéronef selon l'une quelconque des revendications 1 à 5,
**caractérisé en ce que** ledit aéronef comporte un dispositif de mesure (40) de la vitesse d'avancement de l'aéronef, ledit système de contrôle coopérant avec ledit système de mesure pour utiliser le turbomoteur secondaire afin d'entraîner la voilure tournante lorsque ladite vitesse d'avancement est inférieure à un seuil.

7. Aéronef selon l'une quelconque des revendications 1 à 6,
**caractérisé en ce que** ledit aéronef comportant un train d'atterrissage rétractable et un système de détermination (50) pour déterminer si le train d'atterrissage est sorti, ledit système de contrôle coopère avec ledit système de détermination pour utiliser le turbomoteur secondaire afin d'entraîner la voilure tournante lorsque le train d'atterrissage est sorti.

8. Aéronef selon l'une quelconque des revendications 1 à 7,
**caractérisé en ce que** ledit aéronef comporte un dispositif de détermination (60) pour déterminer si l'aéronef est au sol, ledit système de contrôle coopérant avec ledit dispositif de détermination pour utiliser le turbomoteur secondaire afin d'entraîner la voilure tournante lorsque l'aéronef est au sol.

9. Aéronef selon l'une quelconque des revendications 1 à 8,
**caractérisé en ce que** ledit aéronef est dépourvu d'une unité motrice auxiliaire pour fournir de l'énergie électrique, ledit aéronef comportant un système de génération d'énergie électrique (70) coopérant avec le turbomoteur secondaire pour générer une énergie électrique en dehors de chaque phase spécifique et une batterie de 17 Ampères heure (80) pour alimenter le turbomoteur secondaire.

10. Aéronef selon l'une quelconque des revendications 1 à 9,
**caractérisé en ce que** ledit système de contrôle comporte un système de déconnexion (90) du turbomoteur secondaire pour désolidariser le turbomoteur secondaire de la voilure tournante.

11. Procédé d'utilisation d'un aéronef (1) à voilure tournante (2) **caractérisé en ce que** l'aéronef est tel que défini selon l'une quelconque des revendications 1 à 10 au cours duquel on agence le trois turbomoteurs (11, 12, 13) dans l'aéronef (1) pour mettre en mouvement ladite voilure tournante (2) et on contrôle les turbomoteurs pour entraîner la voilure tournante en faisant fonctionner chaque turbomoteur principal (11, 12) en permanence durant un vol et en complément le turbomoteur secondaire (13) durant au moins une phase spécifique prédéterminée.

12. Procédé selon la revendication 11
**caractérisé en ce qu'**on dimensionne le turbomoteur secondaire (13) pour que le coefficient de proportionnalité (k) soit compris entre 0.2 et 0.5 inclus.

13. Procédé selon la revendication 11,
**caractérisé en ce que**, chaque turbomoteur principal (11, 12) pouvant fonctionner selon un régime courant associé à une puissance maximale continue (PMC) et un régime spécifique normal associé à une puissance principale maximale au décollage (PMD) qui est utilisée durant chaque phase spécifique , le turbomoteur secondaire (13) pouvant fonctionner selon une puissance secondaire maximale au décollage (PMD) au régime spécifique normal :
- on dimensionne les turbomoteurs principaux (11, 12) en fonction de la puissance maximale continue (PMC) pour optimiser la consommation spécifique des turbomoteurs principaux (11, 12) à cette puissance maximale continue (PMC),
- on dimensionne la puissance principale maximale au décollage (PMD) en fonction de la puissance maximale continue (PMC) selon une loi de proportionnalité,
- on dimensionne la puissance secondaire maximale au décollage (PMD') en fonction de la puissance principale maximale au décollage (PMD) en mettant en oeuvre ledit coefficient de proportionnalité (k).

14. Procédé selon la revendication 13,
**caractérisé en ce que**, chaque turbomoteur principal (11, 12) pouvant fonctionner selon un régime spécifique d'urgence associé à une unique puissance principale d'urgence (PIU) durant chaque phase spécifique en cas de panne de l'autre turbomoteur principal, le turbomoteur secondaire (13) pouvant fonctionner selon le régime spécifique d'urgence à une puissance secondaire d'urgence (PIU') :
- on dimensionne la puissance principale d'urgence (PIU) en fonction de la puissance maximale continue (PMC) selon une règle de proportionnalité,
- on dimensionne la puissance secondaire d'urgence (PIU') en fonction de la puissance principale d'urgence en mettant en oeuvre ledit coefficient de proportionnalité.

15. Procédé selon l'une quelconque des revendications 11 à 14,
**caractérisé en ce qu'**on régule le turbomoteur secondaire (13) durant chaque phase spécifique en régulant la vitesse de rotation du générateur de gaz du turbomoteur secondaire (13) en fonction de la vitesse de rotation du générateur de gaz d'un turbomoteur principal (11, 12).

16. Procédé selon la revendication 15,
**caractérisé en ce qu'**on régule la vitesse de rotation du générateur de gaz du turbomoteur secondaire pour la faire tendre vers la vitesse de rotation du générateur de gaz d'un turbomoteur principal.

17. Procédé selon l'une quelconque des revendications 11 à 16,
**caractérisé en ce qu'**on régule la vitesse de rotation du générateur de gaz du turbomoteur secondaire :
- en priorité en fonction de la vitesse de rotation du générateur de gaz du turbomoteur principal développant la plus rapide vitesse de rotation du générateur de gaz,
- en cas de panne du turbomoteur principal développant la plus rapide vitesse de rotation du générateur de gaz, en fonction de la vitesse de rotation du générateur de gaz du turbomoteur restant en fonctionnement.

18. Procédé selon la revendication 17,
**caractérisé en ce qu'**on régule la vitesse de rotation du générateur de gaz du turbomoteur secondaire en fonction de la vitesse de rotation de la voilure tournante en cas de panne des deux turbomoteurs principaux.

19. Procédé selon l'une quelconque des revendications 11 à 18,
**caractérisé en ce qu'**on utilise le turbomoteur secondaire afin d'entraîner la voilure tournante dans au moins une des phases spécifiques suivantes :
- lorsque ladite vitesse d'avancement de l'aéronef est inférieure à un seuil,
- ledit aéronef comportant un train d'atterrissage rétractable, on utilise le turbomoteur secondaire afin d'entraîner la voilure tournante lorsque le train d'atterrissage est sorti,
- lorsque l'aéronef est au sol.

## Patentansprüche

1. Luftfahrzeug (1), das mit Drehflügeln (2) und drei Turbomotoren (11, 12, 13) zum Bewegen der Drehflügel (2) ausgerüstet ist, wobei
- die drei Turbomotoren zwei identische Hauptturbomotoren (11, 12) umfassen, wobei jeder Hauptturbomotor gemäß mindestens einer spezifischen Betriebsart, die mit einer entwickelbaren Hauptleistung (PMD, PIU) verbunden ist, funktionieren kann,
**dadurch gekennzeichnet, dass**
- die drei Turbomotoren einen sekundären Turbomotor (13) umfassen, der eine Leistung entwickelt, die höchstens gleich der Hälfte der Leistung beträgt, die von jedem Hauptturbomotor entwickelt wird, wobei der sekundäre Turbomotor (13) gemäß der mindestens einen spezifischen Betriebsart funktionieren kann, indem er eine sekundäre Leistung (PMD', PIU') liefert, die proportional zu einer entsprechenden Hauptleistung (PMD, PIU) ist, gemäß einem Proportionalitätskoeffizienten (k), der kleiner oder gleich 0,5 ist, wobei die sekundäre Leistung somit gleich einer von einem Hauptturbomotor entwickelten Hauptleistung multipliziert mit dem Proportionalitätskoeffizienten ist,
- das Luftfahrzeug ein Steuersystem (20) aufweist zum Antreiben der Drehflügel, indem jeder Hauptturbomotor (11, 12) permanent während eines Fluges betrieben wird und zusätzlich der sekundäre Turbomotor (13) mindestens während einer spezifischen vorbestimmten Phase betrieben wird.

2. Luftfahrzeug nach Anspruch 1,
**dadurch gekennzeichnet, dass** der Proportionalitätsfaktor (k) zwischen 0,2 und einschließlich 0,5 liegt.

3. Luftfahrzeug nach einem der Ansprüche 1 bis 2,
**dadurch gekennzeichnet, dass** während jeder spezifischen Phase das Steuersystem (20) die Turbomotoren regelt, um sie in einer normalen spezifischen Betriebsart (PMD, PMD') zu betreiben, die in Abwesenheit eines Ausfalls des Turbomotors anwendbar ist.

4. Luftfahrzeug nach einem der Ansprüche 1 bis 3,
**dadurch gekennzeichnet, dass** während jeder spezifischen Phase das Steuersystem (20) die drei Turbomotoren (11, 12, 13) regelt, um sie in spezifischen Betriebsarten zu betreiben, die eine normale spezifische Betriebsart (PMD, PMD'), die in Abwesenheit eines Ausfalls eines Turbomotors anwendbar ist, und eine einzige spezifische Notbetriebsart (PIU, PIU') umfassen, die permanent anwendbar ist im Falle eines Ausfalls eines Hauptturbomotors (11, 12).

5. Luftfahrzeug nach einem der Ansprüche 1 bis 4,
**dadurch gekennzeichnet, dass** jeder Turbomotor (11, 12, 13) einen Gasgenerator aufweist, wobei das Luftfahrzeug ein Messsystem (31, 32, 33) zum Messen der Drehgeschwindigkeit Ng eines jeden Gasgenerators aufweist, wobei das Steuersystem (20) mit dem Messsystem (31, 32, 33) zusammenwirkt, um den sekundären Turbomotor während jeder spezifischen Phase zu regeln, indem die Drehgeschwindigkeit des Gasgenerators des Sekundärturbomotors in Abhängigkeit von der Drehgeschwindigkeit des Gasgenerators eines Hauptturbomotors (11, 12) geregelt wird.

6. Luftfahrzeug nach einem der Ansprüche 1 bis 5,
**dadurch gekennzeichnet, dass** das Luftfahrzeug eine Messvorrichtung (40) der Vortriebsgeschwindigkeit des Luftfahrzeugs aufweist, wobei das Steuersystem mit dem Messsystem zusammenwirkt, um den sekundären Turbomotor zu verwenden, um die Drehflügel anzutreiben, wenn die Vortriebsgeschwindigkeit kleiner als ein Schwellenwert ist.

7. Luftfahrzeug nach einem der Ansprüche 1 bis 6,
**dadurch gekennzeichnet, dass** das Luftfahrzeug ein einziebares Landegestell und ein Erfassungssystem (50) zum Erfassen, ob das Landegestell ausgefahren ist, aufweist, wobei das Steuersystem mit dem Erfassungssystem zusammenwirkt, um den sekundären Turbomotor für den Antrieb der Drehflügel einzusetzen, wenn das Landegestell ausgefahren ist.

8. Luftfahrzeug nach einem der Ansprüche 1 bis 7,
**dadurch gekennzeichnet, dass** das Luftfahrzeug eine Erfassungsvorrichtung (60) zum Erfassen, ob sich das Luftfahrzeug am Boden befindet, aufweist, wobei das Steuersystem mit dem Erfassungssystem zusammenwirkt, um den sekundären Turbomotor einzusetzen, um die Drehflügel anzutreiben, wenn das Luftfahrzeug sich am Boden befindet.

9. Luftfahrzeug nach einem der Ansprüche 1 bis 8,
**dadurch gekennzeichnet, dass** das Luftfahrzeug nicht mit einer Hilfsantriebseinheit zum Liefern von elektrischer Energie ausgerüstet ist, wobei das Luftfahrzeug ein System zur Erzeugung elektrischer Energie (70) aufweist, das mit dem Sekundärturbomotor zusammenwirkt, um elektrische Energie außerhalb jeder spezifischen Phase zu erzeugen, sowie eine Batterie mit 17 Amperestunden (80) zur Speisung des Sekundärturbomotors.

10. Luftfahrzeug nach einem der Ansprüche 1 bis 9,
**dadurch gekennzeichnet, dass** das Steuersystem ein System (90) zum Abkoppeln des sekundären Turbomotors aufweist zum Lösen des sekundären Turbomotors von den Drehflügeln.

11. Verfahren zur Verwendung eines Luftfahrzeugs (1) mit Drehflügeln (2),
**dadurch gekennzeichnet, dass** das Luftfahrzeug ein Luftfahrzeug ist gemäß einem der Ansprüche 1 bis 10, wobei die drei Turbomotoren (11, 12, 13) in dem Luftfahrzeug (1) angeordnet werden, um die Drehflügel (2) zu bewegen, und die Turbomotoren gesteuert werden, um die Drehflügel anzutreiben, indem jeder Hauptturbomotor (11, 12) permanent während eines Fluges und zusätzlich der Sekundärturbomotor (13) während mindestens einer vorbestimmten spezifischen Phase betrieben werden.

12. Verfahren nach Anspruch 11,
**dadurch gekennzeichnet, dass** der sekundäre Turbomotor (13) so dimensioniert wird, dass der Proportionalitätskoeffizient (k) zwischen 0,2 und einschließlich 0,5 liegt.

13. Verfahren nach Anspruch 11,
**dadurch gekennzeichnet, dass** jeder Hauptturbomotor (11, 12) in einer aktuellen Betriebsart betrieben werden kann, die mit einer maximalen kontinuierlichen Leistung (PMC) verbunden ist, und in einer normalen spezifischen Betriebsart, die mit einer maximalen Hauptleistung beim Start (PMD) verbunden ist, die während jeder spezifischen Phase angewendet wird, wobei der sekundäre Turbomotor (13) mit einer maximalen sekundären Leistung beim Start (PMD) in der normalen spezifischen Betriebsart betrieben werden kann:
- die Hauptturbomotoren (11, 12) in Abhängigkeit von der maximalen kontinuierlichen Leistung (PMC) dimensioniert werden, um den spezifischen Verbrauch der Hauptturbomotoren (11, 12) bei dieser kontinuierlichen maximalen Leistung (PMC) zu optimieren,
- die maximale Hauptleistung beim Start (PMD) in Abhängigkeit von der maximalen kontinuierlichen Leistung (PMC) gemäß einer Proportionalitätsregel dimensioniert wird,
- die maximale sekundäre Leistung beim Start (PMD') in Abhängigkeit von der maximalen Hauptleistung beim Start (PMD) dimensioniert wird, indem der Proportionalitätskoeffizient (k) eingesetzt wird.

14. Verfahren nach Anspruch 13,
**dadurch gekennzeichnet, dass** jeder Hauptturbomotor (11, 12) in einer spezifischen Notbetriebsart betrieben werden kann, die mit einer einzigen Nothauptleistung (PIU) während jeder spezifischen Phase im Fall eines Ausfalls des anderen Hauptturbomotors betrieben werden kann, wobei der sekundäre Turbomotor (13) in der spezifischen Notbetriebsart mit einer sekundären Notleistung (PIU') betrieben werden kann:
- die Nothauptleistung (PIU) in Abhängigkeit von der maximalen kontinuierlichen Leistung (PMC) gemäß einer Proportionalitätsregel dimensioniert wird,
- die sekundäre Notleistung (PIU') in Abhängigkeit von der Hauptnotleistung dimensioniert wird durch Anwendung des Proportionalitätskoeffizienten.

15. Verfahren nach einem der Ansprüche 11 bis 14,
**dadurch gekennzeichnet, dass** während jeder spezifischen Phase der sekundäre Turbomotor (13) geregelt wird, indem die Drehgeschwindigkeit des Gasgenerators des Sekundärturbomotors (13) in Abhängigkeit von der Drehgeschwindigkeit des Gasgenerators eines Hauptturbomotors (11, 12) geregelt wird.

16. Verfahren nach Anspruch 15,
**dadurch gekennzeichnet, dass** die Drehgeschwindigkeit des Gasgenerators des Sekundärturbomotors geregelt wird, um sie der Drehgeschwindigkeit des Gasgenerators eines Hauptturbomotors anzunähern.

17. Verfahren nach einem der Ansprüche 11 bis 16,
**dadurch gekennzeichnet, dass** die Drehgeschwindigkeit des Gasgenerators des Sekundärturbomotors geregelt wird:
- prioritär in Abhängigkeit von der Drehgeschwindigkeit des Gasgenerators des Hauptturbomotors, der die höchste Drehgeschwindigkeit des Gasgenerators entwickelt,
- im Fall eines Ausfalls des Hauptturbomotors, der die größte Drehgeschwindigkeit des Gasgenerators entwickelt, in Abhängigkeit von der Drehgeschwindigkeit des Gasgenerators des Turbomotors, der in Betrieb bleibt.

18. Verfahren nach Anspruch 17,
**dadurch gekennzeichnet, dass** die Drehgeschwindigkeit des Gasgenerators des Sekundärturbomotors in Abhängigkeit von der Drehgeschwindigkeit der Drehflügel im Fall eines Ausfalls der beiden Hauptturbomotoren geregelt wird.

19. Verfahren nach einem der Ansprüche 11 bis 18,
**dadurch gekennzeichnet, dass** der Sekundärturbomotor verwendet wird, um die Drehflügel in mindestens einer der folgenden spezifischen Phasen anzutreiben:
- wenn die Vortriebsgeschwindigkeit des Luftfahrzeugs kleiner als ein Schwellenwert ist
- wenn das Luftfahrzeug ein Landegestell aufweist, wird der Sekundärturbomotor verwendet, um die Drehflügel anzutreiben, wenn das Landegestell ausgefahren ist,
- wenn sich das Luftfahrzeug am Boden befindet.

## Claims

1. Aircraft (1) provided with a rotary wing (2) and three turboshaft engines (11, 12, 13) to set said rotary wing (2) in motion,
- said three turboshaft engines include two identical main turboshaft engines (11, 12), each main turboshaft engine being able to operate at at least one specific engine speed associated with a main power (PMD, PIU) that can be developed,
**characterised in that**:
- said three turboshaft engines including a secondary turboshaft engine (13), which develops a power that is equal to no more than half the power developed by each main turboshaft engine, said secondary turboshaft engine (13) being able to operate at said at least one specific engine speed by supplying secondary power (PMD', PIU') proportional to the corresponding main power (PMD, PIU) according to a proportionality coefficient (k) less than or equal to 0.5, said secondary power therefore being to the main power developed by a main turboshaft engine multiplied by said proportionality coefficient,
- said aircraft has a control system (20) to drive the rotary wing by causing each main turboshaft engine (11, 12) to operate constantly during a flight, and in addition the secondary turboshaft engine (13) during at least one predetermined specific phase.

2. Aircraft according to claim 1,
**characterised in that** said proportionality coefficient (k) is in the range 0.2 to 0.5 inclusive.

3. Aircraft according to any one of claims 1 to 2,
**characterised in that**, during each specific phase, said control system (20) regulates said turboshaft engines to make them operate according to a normal specific engine speed (PMD, PMD') that can be used in the absence of a breakdown of a turboshaft engine.

4. Aircraft according to any one of claims 1 to 3,
**characterised in that**, during each specific phase, said control system (20) regulates said three turboshaft engines (11, 12, 13) to make them operate according to specific engine speeds including a normal specific engine speed (PMD, PMD') that can be used in the absence of a breakdown of a turboshaft engine, and a single emergency specific engine speed (PIU, PIU') that can be used constantly in the event of breakdown of a main turboshaft engine (11, 12).

5. Aircraft according to any one of claims 1 to 4,
**characterised in that**, each turboshaft engine (11, 12, 13) comprising a gas generator, said aircraft comprises a measurement system (31, 32, 33) for measuring the rotational speed Ng of each gas generator, said control system (20) cooperating with said measurement system (31, 32, 33) so as to regulate the secondary turboshaft engine during each specific phase by regulating the rotational speed of the gas generator of the secondary turboshaft engine as a function of the rotational speed of the gas generator of a main turboshaft engine (11, 12).

6. Aircraft according to any one of claims 1 to 5,
**characterised in that** said aircraft comprises a measurement device (40) for measuring the forward speed of the aircraft, said control system cooperating with said measurement system so as to use the secondary turboshaft engine to drive the rotary wing when said forward speed is below a threshold.

7. Aircraft according to any one of claims 1 to 6,
**characterised in that**, said aircraft comprising retractable landing gear and a determination system (50) for determining whether the landing gear has come down, said control system cooperates with said determination system so as to use the secondary turboshaft engine in order to drive the rotary wing when the landing gear has come down.

8. Aircraft according to any one of claims 1 to 7,
**characterised in that** said aircraft comprises a determination device (60) for determining whether the aircraft is on the ground, said control system cooperating with said determination device so as to use the secondary turboshaft engine in order to drive the rotary wing when the aircraft is on the ground.

9. Aircraft according to any one of claims 1 to 8,
**characterised in that** said aircraft has no auxiliary power unit for providing electrical energy, said aircraft comprising an electrical power generation system (70) cooperating with the secondary turboshaft engine so as to generate electrical power outside each specific phase and a 17 ampere-hour (80) battery to supply the secondary turboshaft engine.

10. Aircraft according to any one of claims 1 to 9,
**characterised in that** said control system comprises a disconnection system (90) for disconnecting the secondary turboshaft engine in order to uncouple the secondary turboshaft engine from the rotary wing.

11. Method for using an aircraft (1) with a rotary-wing (2) **characterised in that** the aircraft as defined according to any one of claims 1 to 10.
during which the three turboshaft engines (11, 12, 13) are arranged in the aircraft (1) so as to set said rotary wing (2) in motion and the turboshaft engines are controlled so as to drive the rotary wing by causing each main turboshaft engine (11, 12) to operate constantly during a flight, and in addition the secondary turboshaft engine (13) during at least one predetermined specific phase.

12. Method according to claim 11,
**characterised in that** the secondary turboshaft engine (13) is given dimensions such that the proportionality coefficient (k) is in the range 0.2 to 0.5 inclusive.

13. Method according to claim 11,
**characterised in that**, each main turboshaft engine (11, 12) being able to operate at a current engine speed associated with a continuous maximum power (PMC) and a normal specific engine speed associated with a maximum main power at take-off (PMD), which is used during each specific phase, the secondary turboshaft engine (13) being able to operate at a maximum secondary power on take-off (PMD) at the normal specific engine speed:
- the main turboshaft engines (11, 12) are given dimensions as a function of the continuous maximum power (PMC) so as to optimise the specific consumption of the main turboshaft engines (11, 12) at this continuous maximum power (PMC),
- the maximum main power at take-off (PMD) is given dimensions as a function of the continuous maximum power (PMC) according to a law of proportionality,
- the maximum secondary power at take-off (PMD') is given dimensions as a function of the maximum main power at take-off (PMD) by implementing said proportionality coefficient (k),

14. Method according to claim 13,
**characterised in that**, each main turboshaft engine (11, 12) being able to operate at an emergency specific engine speed associated with a single emergency main power (PIU) during each specific phase in the event of breakdown of the other main turboshaft engine, the secondary turboshaft engine (13) being able to operate at the emergency specific engine speed at an emergency secondary power (PIU'):
- the emergency main power (PIU) is given dimensions as a function of the continuous maximum power (PMC) according to a rule of proportionality,
- the emergency secondary power (PIU') is given dimensions as a function of the emergency main power by implementing said proportionality coefficient.

15. Method according to any one of claims 11 to 14,
**characterised in that** the secondary turboshaft engine (13) is regulated during each specific phase by regulating the rotational speed of the gas generator of the secondary turboshaft engine (13) as a function of the rotational speed of the gas generator of a main turboshaft engine (11, 12).

16. Method according to claim 15,
**characterised in that** the rotational speed of the gas generator of the secondary turboshaft engine is regulated to make it tend towards the rotational speed of the gas generator of a main turboshaft engine.

17. Method according to any one of claims 11 to 16,
**characterised in that** the rotational speed of the gas generator of the secondary turboshaft engine is regulated:
- first and foremost as a function of the rotational speed of the gas generator of the main turboshaft engine developing the fastest rotational speed of the gas generator.
- in the event of breakdown of the main turboshaft engine developing the fastest rotational speed of the gas generator, as a function of the rotational speed of the gas generator that is still operating.

18. Method according to claim 17,
**characterised in that** the rotational speed of the gas generator of the secondary turboshaft engine is regulated as a function of the rotational speed of the rotary wing in the event of breakdown of both main turboshaft engines.

19. Method according to any one of claims 11 to 18,
**characterised in that** the secondary turboshaft engine is used to drive the rotary wing in at least one of the following specific phases:
- when said forward speed of the aircraft is below a threshold,
- said aircraft comprising retractable landing gear, the secondary turboshaft engine is used in order to drive the rotary wing when the landing gear has come down,
- when the aircraft is on the ground.
